# EUROPEAN PATENT SPECIFICATION

(11) **EP 3 994 491 B1**
(45) Date of publication and mention of the grant of the patent: **03.06.2026**
(21) Application number: 20836765.6
(22) Date of filing: 22.06.2020
(51) Int. Cl.: G01S 13/08, G01S 15/08, G01S 17/08, G01S 15/931, G01S 17/931, G01S 7/481, B60Q 9/00, G01S 7/03, G01S 7/292, G01S 7/497, G01S 13/931, G01S 7/40

(54) **VEHICLE COMPRISING A NON-ROTATING DISTANCE MEASURING SENSOR PROTECTED INSIDE THE WHEEL RIM, FOR POSITIONING OF THE VEHICLE**
FAHRZEUG MIT EINEM IN DER RADFELGE GESCHÜTZTEN, NICHT-ROTIERENDEN ABSTANDSMESSSENSOR ZUR POSITIONIERUNG DES FAHRZEUGS
VÉHICULE COMPRENANT UN CAPTEUR DE MESURE DE DISTANCE NON ROTATIF PROTÉGÉ À L'INTÉRIEUR DE LA JANTE DE ROUE, POUR LE POSITIONNEMENT DU VÉHICULE

(30) Priority: 05.07.2019 SE 1950849
(43) Date of publication of application: 11.05.2022
(73) Proprietor: Scania CV AB, 151 87 Södertälje (SE)
(72) Inventor: CLAESSON, André, 146 38 Tullinge (SE); RAMSTEDT, Magnus, 117 58 Stockholm (SE); FLODSTRÖM, Kristofer, 151 37 Södertälje (SE)
(74) Representative: Scania CV AB
(86) International application number: PCT/SE2020/050638
(87) International publication number: WO 2021/006794

(56) References cited:
- DE-A1- 102011 118 685
- KR-A- 20150 120 125
- US-A1- 2005 122 234
- US-A1- 2006 212 193
- US-A1- 2014 002 253
- US-A1- 2014 002 253

## Description

### TECHNICAL FIELD

The present disclosure relates in general to a vehicle comprising a first sensor configured to measure distance.

### BACKGROUND

When a bus is to stop at a bus stop for allowing passengers to board the bus, irrespective of whether it is on-boarding or off-boarding, it is important that the bus is positioned at an appropriate distance from the curb to allow easy boarding. If the vehicle is positioned too far from the curb, there is a risk of passengers stepping in the gap between the bus and the curb. A too large distance between the lateral side of the bus and the curb therefore poses a risk for personal injury. The driver may therefore seek to drive as close as possible to the curb. However, when doing so, there is a risk that the bus hits the curb. This may in turn cause damage to the bus; such as damage of the chassis and/or body of the vehicle, damage to the wheel bearing, wear or other damage of the tires, alteration of the suspension setting which in turn may cause wear of the tires, etc.. Furthermore, there is a risk that it may negatively impact passengers of the vehicle, in particular standing passengers who may risk falling as a result of the hit. Furthermore, if the bus is positioned too close to the curb, there is a risk for damage in case of the bus kneeling for facilitating for boarding of wheel chairs, baby carriages, or passengers with reduced mobility. There is thus a desire of providing assistance to a driver in positioning a vehicle at an appropriate distance from a curb.

Previously known solutions for assisting a driver in positioning the bus at an appropriate distance from the curb rely on established infrastructure, more specifically, markings in the road and/or the sidewalk/curb. These markings are read by some type of a camera and through image analysis, a trajectory for positioning the bus at an appropriate distance may be determined. Examples of such solutions are known from JP 2017-197100 A and EP 1 012 025 B1. These solutions are thus dependent on the infrastructure in order to provide assistance to the driver and therefore suffer from certain problems. For example, if the markings have been degraded or for other reasons cannot be read by the camera, the driver assistance cannot be provided. Furthermore, if the bus is used outside the area of the established infrastructure, the driver assistance is not available.

The document US20060212193A1 discloses a solution for tire pressure monitoring using hall effect sensors. A magnet is movable in an axial direction of the tire and a Hall effect sensor is arranged on a non-rotating part of the vehicle in a position in which it is in magnetic field generated by the magnet.

The document US20140002253A1 discloses a motor vehicle comprising a distance measuring device comprising at least one sensor. The sensor is arranged on the vehicle wheel and detects a distance between at least one of the rims and an adjacent obstacle.

### SUMMARY

The object of the present invention is to enable direct measurement of a distance between a vehicle and a potential object in the vicinity of the vehicle, such as a curb. It is a further object of the present invention to provide a solution which is not dependent of markings in the infrastructure in order to enable the distance measurement.

The object is achieved by means of the appended independent claim.

In accordance with the present disclosure, a vehicle is provided. The vehicle comprises at least one wheel comprising a wheel rim. The vehicle further comprises a first sensor configured to measure distance. The first sensor is attached to a non-rotating constituent component of the vehicle by means of a holding device. The non-rotating constituent component is a beam member of a wheel suspension arrangement of at least one wheel. The holding device is configured to allow the first sensor to be positioned in a first position inside of the wheel rim so as to be protected against the surrounding environment during travel by the wheel rim. The control device is configured to filter out distance measurements which are equal to or smaller than a distance between the first sensor and the wheel rim.

When in the first position, the first sensor is able to directly measure a distance to an object in the vicinity of the vehicle. The first sensor will, when in the first position, be located at an underside of the vehicle and is thus able to accurately measure distance to objects also of low heights, for example a curb or the like. The information regarding the measured distance to the object may for example be used to give a driver of the vehicle a warning regarding a risk of collision with the object. Moreover, due to the first position of the first sensor, it is fairly protected by the wheel rim against water, dirt, road salt, dust, particles etc. which may otherwise harm the ability of the first sensor to correctly measure the distance to an object and/or reduce the service life of the first sensor. Moreover, in view of the first sensor being attached to a non-rotating component by means of a holding device, it can be assured that the first sensor is measuring a distance in a known direction from a known position. Thereby, the information regarding the distance to an object can be accurately used for the intended purpose. Moreover, since the first sensor may be used to directly measure a distance, it is independent of markings in the infrastructure for the purpose of determining a distance between the vehicle and a potential object, such as a curb.

The first sensor, when positioned in the first position, is arranged so as to measure a distance through one or more through-openings of the wheel rim during rotation of the wheel rim. Thereby, it is possible to measure distance to a potential object present laterally of the vehicle, while at the same time ensuring that the first sensor is protected against water, dirt, road salt, particles etc..

The non-rotating constituent component is a beam member of a wheel suspension arrangement of the at least one wheel. Thereby, the first sensor may be positioned close to the wheel rim. Furthermore, it may enable the first sensor to measure distance in dependence of a steering angle, if the at least one wheel is a steered wheel.

The holding device may be configured to allow the first sensor to be temporarily positioned in a second position, the second position being further than the first position from a surface on which the vehicle is present. Thereby, the first sensor may be moved to the more protected second position when it is not used to measure a distance. This in turn minimises the risk for damage and improves the service life of the first sensor.

The vehicle may further comprise a cleaning device configured to allow cleaning of the first sensor by means of a cleaning medium ejected through a nozzle of the cleaning device. Thereby, the first sensor may be cleaned from water, dirt, road salt, dust etc. at times when the first sensor is not in use. Thereby, the ability of the first sensor to accurately measure a distance when in use is improved and the service life of the first sensor is prolonged.

According to one alternative, the cleaning device may be fluidly connected to a brake bell of the vehicle so as to allow pressurised air therefrom to be used as the cleaning medium. Thereby, the pressurised air, normally released from the brake bell to the surrounding atmosphere, may be reused for the purpose of cleaning the first sensor. This may avoid the need for adding components to the vehicle, such as separate tanks for the cleaning medium or a separate compressor.

The first sensor may be arranged inside a tubular cover. Thereby, the first sensor is further protected against potentially damaging factors such as water, dirt, road salt, dust and particles. The tubular cover may comprise an open end and a closed end. Thereby, it is possible to create an air pocket minimising the risk of dirt etc. entering into the tubular cover when the vehicle is traveling.

The tubular cover may comprise an opening into which a nozzle of a cleaning device extends. By such an arrangement, it is for example possible to introduce the cleaning medium rearwardly of the first sensor and allowing it to flow through the tubular cover to an open end thereof. At the same time, it is possible to achieve the same effect as with a closed end of the tubular cover of creating an air pocket when the cleaning medium is not flowing through the tubular cover.

The vehicle may further comprise a control device configured to determine a desired trajectory of the vehicle for positioning the vehicle in relation to an object based on a determined distance to the object measured by the first sensor. The control device may further be configured to provide assistance for travel of the vehicle according to the determined desired trajectory. Thereby, a driver may be provided with assistance in positioning the vehicle in relation to for example a curb when approaching a bus stop or the like. This in turn assists the driver in ensuring that the vehicle is positioned at an appropriate distance from the curb to allow easy boarding and at the same time avoid the risk of hitting the curb when approaching the intended stop.

The control device is configured to filter out distance measurements, measured by the first sensor, which are equal to or smaller than a distance between the first sensor and the wheel rim. Thereby, the risk for incorrect determination of a distance in case of the first sensor being configured to measure distance through one or more through-openings of the wheel rim can be avoided. This in turn improves the accuracy in the determined desired trajectory of the vehicle.

### BRIEF DESCRIPTION OF DRAWINGS

- Fig. 1: schematically illustrates a perspective view of an example of a vehicle;
- Fig. 2a: schematically illustrates a partial front view of a part of a vehicle according to a first exemplifying embodiment;
- Fig. 2b: schematically illustrates a partial front view of a part of a vehicle according to a second exemplifying embodiment;
- Fig. 3: schematically illustrates a bottom view of a vehicle;
- Fig. 4: schematically illustrates a top view of a situation of a vehicle swinging into a lay-by;
- Fig. 5c: illustrates a perspective view of a vehicle wheel;
- Fig. 6a: schematically illustrates a cross sectional view of a sensor arranged in a tubular cover according to one alternative;
- Fig. 6b: schematically illustrates a cross sectional view of a sensor arranged in a tubular cover according to another alternative;
- Fig. 7: represents a flowchart schematically illustrating a method for providing assistance in positioning of a vehicle;
- Fig. 8: schematically illustrates a device that may constitute, comprise or be a part of a control device configured to provide assistance for positioning of a vehicle.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

In the present disclosure, the term "inside" shall be considered to mean in relation to the external boundaries of the vehicle, unless explicitly disclosed otherwise. Thus, the term "inside of" means a location seen from a side of the vehicle in the direction of a central axis of the vehicle. Furthermore, the term "inside of" in the present disclosure encompasses "directly inside of" as well as "inwardly of".

Moreover, in the present disclosure, a "non-rotating constituent component" of the vehicle shall be considered to mean a constituent component of the vehicle which is not configured to rotate a complete revolution about a rotational axis of the constituent component during travel of the vehicle. A "non-rotating constituent component" may however be configured to swing or pivot about an axis. Examples of non-rotating constituent components include the chassis, a wheel suspension member, a brake caliper etc. In contrast, a rotating constituent component is in the present disclosure considered to mean a constituent component which is allowed to rotate one or more revolutions during travel of the vehicle. Examples of rotating constituent components of a vehicle include a vehicle wheel, a propeller shaft or a transmission shaft.

Moreover, when the term "horizontally" is used herein, it shall be considered to be in reference to the surface on which the vehicle is located. In other words, "horizontally" shall be interpreted as in a plane parallel to the ground, i.e. the road. The ground is herein considered to be a horizontal plane.

A "driver" of a vehicle, when discussed herein, may be a driver present on board the vehicle, or a person located outside of the vehicle, unless explicitly disclosed otherwise. A driver who is not present on board the vehicle may for example be an operator who is able to control the vehicle from a remote control centre.

In the present disclosure, the term "curb" shall be interpreted broadly and thus encompasses any type of raised edge at a side of road. It may for example be the edge of a sidewalk. It is also intended to encompass for example a bank of snow at the side of the road, resulting for example of snow ploughing.

The present invention is primarily developed for the purpose of providing means enabling providing assistance to a driver of the vehicle in positioning of the vehicle in relation to a curb at a stop, such as a bus stop or a loading area. It may however also be used for other purposes, such as enabling providing assistance in minimising the risk of collision with an object in the road. Moreover, the present invention is not limited to a manually operated vehicle. In other words, the vehicle may be an autonomous vehicle.

Moreover, although the present invention has been developed primarily for the purpose of public transport vehicles, such as busses, it is also applicable to other types of vehicles. Examples of other vehicles that may benefit from the present invention includes, but are not limited to, distribution trucks, garbage trucks or vehicles provided with a rear lift from which it may be desired to be able to easily load the vehicle, from for example a sidewalk when the vehicle is standing along said sidewalk. The vehicle is however not limited to the above mentioned examples, but may be any vehicle adapted for traffic on roads.

In accordance with the present disclosure, a vehicle is provided. The vehicle comprises at least one wheel comprising a wheel rim. The vehicle further comprises a first sensor configured to measure distance to an object possibly present in the environment surrounding the vehicle. The first sensor may thus be used for the purpose of detecting the presence of an object outside of the vehicle. The first sensor is attached to a non-rotating constituent component of the vehicle by means of a holding device. The holding device is configured to allow the first sensor to be positioned in a first position inside of the wheel rim so as to be protected by the wheel rim.

The first sensor configured to measure distance may be selected from the group consisting of laser sensors (including lidar), ultrasonic sensors, or radar. Preferably, the first sensor is a laser sensor. Laser sensors have the advantage of providing good accuracy in the measurement of distance. They can also be of small size and therefore easily integrated into a vehicle. Furthermore, they are able to measure distance to objects of a large range of materials, including for example snow.

When the first sensor is in the first position, the first sensor will thus be arranged at an underside of the vehicle. Thereby, the first sensor is able to measure distance to objects having a small height above the surface, for example a curb or a bank of snow, during travel of the vehicle. An underside of the vehicle is often subjected to conditions which are not suitable for a sensor to be exposed to, for example dirt, snow, road salt or gravel, or particles released from the surface of the road etc. However, by arranging the first sensor such that it is protected by the wheel rim of a vehicle wheel, the exposure of the first sensor to these conditions may be minimised. This in turn increases the life time of the first sensor and further ensures that accurate readings of distance to a potential object may be achieved.

The first sensor may for example be intended to measure distance in a lateral direction of the vehicle or in a longitudinal direction of the vehicle, or in a direction which is angled in relation to the lateral direction or the longitudinal direction of the vehicle. The first sensor may be configured to measure distance essentially horizontally.

According to one embodiment, the first sensor may, when in the first position, be arranged so as to measure distance horizontally through one or more through-openings of the wheel rim during travel of the vehicle, i.e. when the wheel rim is rotating. It shall be recognised that distance measurements to the wheel rim will likely automatically be recorded by the sensor during the rotation of the wheel and thus also the wheel rim. However, these small distance values are obviously not corresponding to a distance to an object at a side of the vehicle and may thus be ignored in the determination of the distance to the object.

By arranging the first sensor to measure distance through one or more through-openings of the wheel rim, it is possible to determine a distance to an object located laterally of the vehicle at the same time as allowing the first sensor to be sufficiently protected against the surrounding environment during travel of the vehicle.

According to examples not part of the invention, the non-rotating constituent component, to which the first sensor is attached by means of the holding device, may be any non-rotating component of the vehicle as long as the holding device may extend to the first position of the first sensor and the first sensor will not be moved in relation to the wheel rim during rotation of the wheel rim during travel of the vehicle and measurement of a distance by means of the first sensor. Examples of suitable non-rotating constituent components of the vehicle, to which the first sensor may be attached by means of the holding device includes elements of a wheel suspension arrangement, a brake caliper, a housing of wheel hub motor, or the like. According to the invention, the non-rotating constituent component to which the first sensor is attached by means of the holding device constitutes a beam member of the wheel suspension arrangement. Thereby, the first sensor may be configured to measure distance through the wheel rim and in a direction dependent of the steering angle of the wheel. In other words, the direction of the distance measurement may follow the direction of the wheel such that the direction of the distance measurement is perpendicular to the wheel (more specifically, perpendicular to the radius of the wheel).

The holding device may be configured to hold the first sensor in the first position at all times. Alternatively, the holding device may be configured to allow the first sensor to be positioned at the first position when there is a desire to measure distance, and in a second position which is more protected when the first sensor is not intended to measure distance. This second position may suitably be further from the surface on which the vehicle is present, than the first position. The holding device may for example have a telescopic configuration, a foldable configuration, or a pivotable configuration for said purpose.

The vehicle may further comprise a cleaning device configured to allow cleaning of the first sensor by means of a cleaning medium. The cleaning medium may for example be ejected through a nozzle of the cleaning device. The nozzle may for example be arranged so as to direct the cleaning medium towards a lens of the first sensor, or to allow the cleaning medium to flow parallel with the first sensor. The cleaning medium may be pressurised air or a liquid, such as water. In case of a liquid cleaning medium, pressurised air may be used to dry the first sensor after having been subjected to the liquid cleaning medium.

According to one alternative, the cleaning device may be fluidly connected to a brake bell of the vehicle so as to allow pressurised air to be used as the cleaning medium. Thereby, the excess pressurised air normally released from the brake bell may be reused for the purpose of cleaning the first sensor. This may avoid the need for adding components to the vehicle, such as separate tanks for the cleaning medium and/or a separate compressor.

The first sensor may advantageously be arranged inside a tubular cover so as to be further protected against water, dirt, road salt, dust and particles. The tubular cover may suitably comprise an open end in the direction of measurement of the first sensor, and a closed end in the opposing end of the tubular cover. Thereby, an air pocket may be created inside the tubular cover, which in turn minimises the risk of entry of dirt etc. into the tubular cover. The tubular cover may also comprise an opening for inserting a nozzle of the above described cleaning device.

The first sensor may be arranged so as to measure distance essentially horizontally in relation to the vehicle. Measuring a distance horizontally avoids the need of using triangulation to determine a distance. The fact that the first sensor is arranged at an underside of the vehicle also enables that distances to objects of a low height may be accurately determined, for example a curb.

According to one embodiment, the vehicle further comprises a second sensor configured to measure distance. The second sensor may be arranged such as to measure distance in a direction different from the direction in which the first sensor is arranged to measure the distance. For example, the first sensor may be configured to measure a distance to an object located at a lateral side of the vehicle whereas the second sensor may be configured to measure distance to an object located in front of the vehicle. The second sensor may be attached to a non-rotating constituent component of the vehicle by means of the same holding device by which the first sensor is attached to the non-rotating constituent component. In such a case, the second sensor may be configured to be positioned in a position inside of the same wheel rim as the first sensor, so as to be protected by said wheel rim. Alternatively, the second sensor may be attached to a non-rotating constituent component by means of a second holding device. The second sensor configured to measure distance may, just like the first sensor, be selected from the group consisting of laser sensors (including lidar), ultrasonic sensors, or radar.

The vehicle may further comprise a control device configured to determine a desired trajectory of the vehicle for positioning the vehicle in relation to an object based on a determined distance to the object measured by the first sensor. The control device may further be configured to provide assistance for travel of the vehicle according to the determined desired trajectory. Thereby, a driver may be provided with assistance in positioning the vehicle in relation to for example a curb when approaching a bus stop or the like. This in turn assists the driver in ensuring that the vehicle is positioned at an appropriate distance from the curb to allow easy boarding and at the same time avoid the risk of hitting the curb when approaching the intended stop.

The control device is further configured to filter out distance measurements, measured by the first sensor, which are equal to or smaller than a distance between the first sensor and the wheel rim. Thereby, the risk for incorrect determination of a distance in case of the first sensor being configured to measure distance through one or more through-openings of the wheel rim can be avoided. This in turn improves the accuracy in the determined desired trajectory of the vehicle.

In accordance with the present disclosure, a method for providing assistance in positioning of a vehicle in relation to a curb when approaching a stop for said vehicle is furthermore provided. The method is performed by a control device. The method may be a method for providing driver assistance in positioning of a vehicle in relation to a curb or platform in relation to a curb or platform when approaching a stop for said vehicle. The method comprises a step of determining a desired trajectory of the vehicle, for positioning a longitudinal side of the vehicle within a predetermined distance interval from the curb at the stop, based on information from at least a first sensor (as described above) configured to measure distance in a first direction of the vehicle. The method further comprises a step of providing assistance for travel of the vehicle according to the determined desired trajectory.

The step of determining a desired trajectory of the vehicle may further comprise taking into account the travelling speed of the vehicle. Thereby, the accuracy in the determination of the desired trajectory of the vehicle is increased. This in turn facilitates the positioning of the vehicle in relation to the curb or platform as it improves the accuracy of the provided assistance.

The first direction may be perpendicular or angled to the longitudinal side of the vehicle. Alternatively, the first direction may be perpendicular or angled in relation to a steered wheel of the vehicle. Thereby, a distance to an object at the side of the road may be determined. This further improves the accuracy in the determination of the desired trajectory of the vehicle. This in turn facilitates the positioning of the vehicle in relation to the curb as it improves the accuracy of the provided assistance.

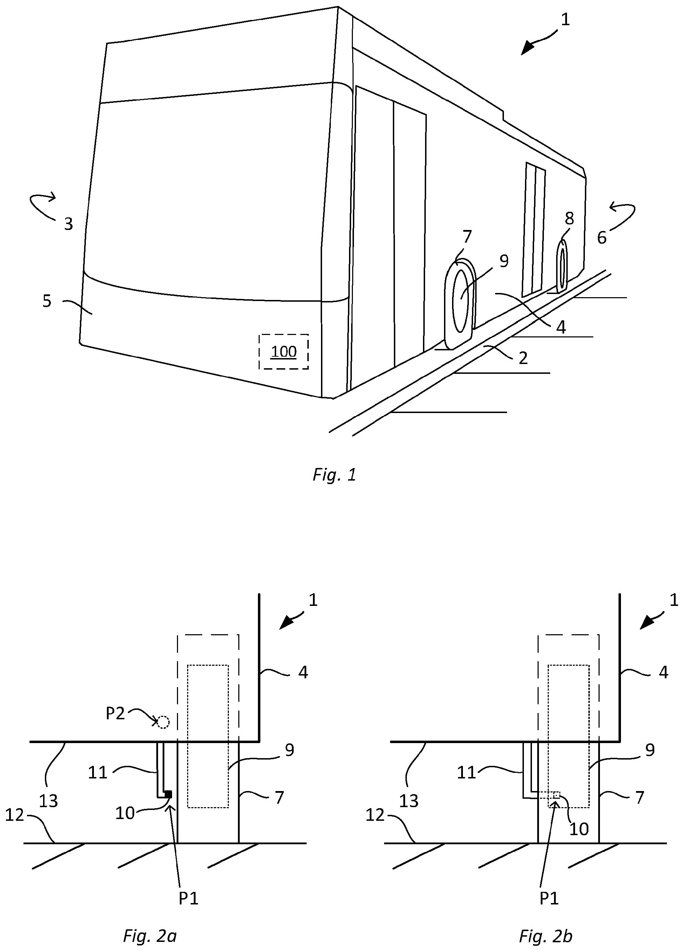

Figure 1 schematically illustrates an example of a vehicle 1 according to the present disclosure. The vehicle 1 is in figure 1 positioned at a curb 2. The vehicle is here illustrated in the form of a bus, but is not limited thereto. The vehicle comprises a first (right-hand) longitudinal side 3, a second (left-hand) longitudinal side 4, a front side 5 and a rear side 6. The vehicle further comprises a pair of front wheels 7 and a pair of rear wheels 8. The front wheels 7 may be steered wheels. The rear wheels 8 may be non-steered wheels or steered wheels. Each of the wheels 7, 8 comprises a wheel rim 9. The vehicle comprises a number of constituent components, together forming the vehicle. Some of the constituent components are non-rotating constituent components, whereas others are rotating constituent components. The vehicle 1 may further comprise a control device 100 as will be described further below.

Figure 2a schematically illustrates a partial front view of a vehicle 1 according to a first exemplifying embodiment. The partial view illustrates a lower view, close to the left-hand longitudinal side 4 of the vehicle 1. The vehicle 1 is illustrated as present on a surface 12, such as a road surface. In the figure, one front wheel 7 is partially visible, the non-visible portion schematically illustrated by dashed lines. The front wheel 7 comprises a wheel rim 9 schematically illustrated with dotted lines. The vehicle comprises a first sensor 10 configured to measure distance to an object remote from the vehicle. The first sensor 10 is positioned at an underside 13 of the vehicle 1 by means of a holding device 11. The holding device 11 is in turn attached to a non-rotating constituent component (not visible) of the vehicle such that it is able to hold the first sensor 10 in a first position P1 during travel of the vehicle. The first position P1 is inside of, more specifically inwardly, of the wheel rim 9, as shown in the figure. Thereby, the wheel rim 9 provides a protection to the first sensor 10 against dirt, impact from particular matter etc..

The holding device 11 may be configured to hold the first sensor 10 fixedly in the first position at all times. Alternatively, the holding device 11 may be configured to allow the first sensor 10 to be moved between the first position P1 and at least a second position P2. In other words, the holding device may be configured to allow the first sensor to be temporarily positioned in a second position P2, the second position P2 being further that the first position P1 from a surface 12 on which the vehicle 1 is present. When in the second position P2, the first sensor 10 is further protected against the environment. The first sensor 10 may be positioned in the second position P2 when there is no intention to measure distance to an object by means of the first sensor 10, in other words when the first sensor is in a deactivated state. However, when the first sensor 10 is positioned in the first position P1, it may be in an active state and thereby measure a distance to an object. The first sensor 10 may naturally also be in a deactivated state when in the first position P1.

For the purpose of allowing the first sensor 10 to be positioned in the first position P1 and second position P2, respectively, the holding device may for example have a telescopic configuration, may be pivotably arranged in relation to the non-rotating constituent component (for example around a longitudinal axis), comprise a pivotable joint, or the like.

Figure 2b schematically illustrates a partial front view of a vehicle 1 according to a second exemplifying embodiment. The second exemplifying embodiment shown in Figure 2b corresponds to the first exemplifying embodiment shown in Figure 2a, but with the difference in that the first sensor 10 is positioned directly inside of the wheel rim 9, in contrast to inwardly of the wheel rim.

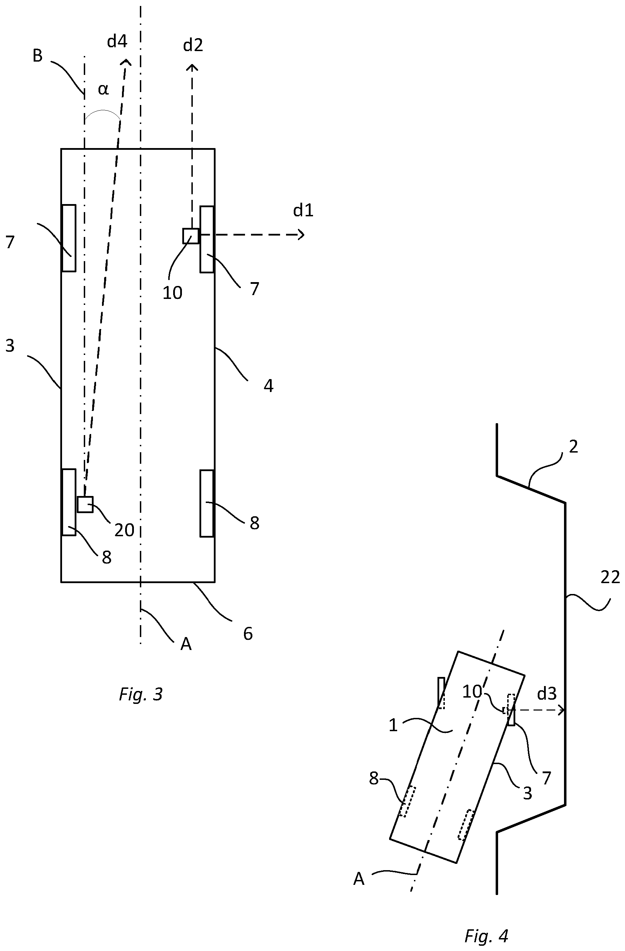

Figure 3 schematically illustrates a bottom view of a vehicle 1 according to the present disclosure. The vehicle 1 has a longitudinal central axis A. As shown in the figure, the vehicle comprises a first and a second front wheel 7, as well as a first and a second rear wheel 8. The vehicle 1 further comprises a first sensor 10 arranged in the vicinity of a front wheel 7. More specifically, the first sensor 10 is positioned inside of the wheel rim of the left-hand front wheel 7. This means that the first sensor 10 is positioned between the longitudinal side 4 and the central axis A, at a longitudinal position corresponding to the longitudinal position of the left-hand front wheel 7. Furthermore, the first sensor is transversely positioned so close to the wheel rim (not shown in the figure) that the wheel rim provides a protection to the first sensor, as previously discussed. This means that the first sensor 10 is positioned in the vicinity of the wheel rim. The first sensor 10 is however not directly attached to the front wheel 7 and will thus not rotate with the front wheel during travel of the vehicle 1. The first sensor is, as previously described, held in the intended position(s) by means of the holding device (not shown in the present figure).

The first sensor 10 is intended to measure distance to an object, external of the vehicle, horizontally or essentially horizontally. The object may be located at any side of the vehicle. For example, the first sensor may be arranged so as to measure distance in a lateral direction of the vehicle, as illustrated by the arrow d1. Alternatively, the first sensor 10 may be arranged so as to measure distance in a longitudinal direction of the vehicle, as illustrated by arrow d2. The direction in which the first sensor 10 measures distance is given by the direction of the first sensor 10 as such, which in turn is given by how it is held in the position by the holding device.

The holding device may be used for holding only the first sensor. Alternatively, the holding device may be configured for holding two or more sensors configured to measure distance. It also plausible that the vehicle comprises two or more sensors positioned in the vicinity of the same wheel rim, but held in position by different holding devices, if desired. Irrespective of being held by the same holding device or not, the two or more sensors may be arranged so as to measure distance in different directions relative to the vehicle. For example, one sensor configured to measure distance may be arranged so as to measure distance in the direction of the arrow d1, i.e. a lateral direction, whereas another sensor configured to measure distance may be arranged to measure distance in the direction of the arrow d2, i.e. in a longitudinal direction.

The vehicle 1 may further comprise a second sensor 20 configured to measure distance. The second sensor 20 may be attached to a non-rotating constituent component of the vehicle by means of a holding device in the same manner as the first sensor 10, but inside of a wheel rim of a different wheel of the vehicle. The second sensor 20 may for example be arranged at rear wheel 8 of the vehicle. The second sensor 20 may be arranged so as to measure distance in the corresponding manner as described above with regard to the first sensor 10. In Figure 3, the second sensor is illustrated as measuring distance in a direction, illustrated by arrow d4, being angled with an angle α relative to a longitudinal axis B parallel to the central axis A. The angle α may for example be 10° - 60°, but is not limited thereto.

The first sensor 10 (and/or the second sensor 20) may also be held in the first position by the holding device such that the first sensor is arranged so that it will follow the steering angle of the wheel at which it is arranged. This may for example be achieved by the holding device being attached to a member of the wheel suspension of the wheel comprising the wheel rim. This is exemplified in Figure 4. Figure 4 schematically illustrates a top view of a situation where a vehicle is swinging into a lay-by 22 at the side of the road. The lay-by 22 may for example be a bus stop and be defined by the extension of a curb 2. In the illustrated situation, the steered front wheels have a direction given by a steering angle of the wheels and are not parallel to the central axis A. The first sensor 10 is in the figure positioned inside of wheel rim of the front wheel 7 at the right-hand side 3 of the vehicle. The holding device (not shown in the figure) is attached to a member of the wheel suspension of the steered front wheel 7, and is thus configured so as to hold the first sensor (when in the first position P1) relative to the wheel rim of the wheel 7 which is essentially constant. Thereby, the first sensor 10 is arranged so as to measure distance in a direction as illustrated by arrow d3. The direction d3 is dependent of the steering angle of the wheel, and may therefore depart from the lateral direction of the vehicle as shown in the figure.

The first sensor 10 and the optional second sensor 20 may each be positioned at any of the front or rear wheels of the vehicle. The first sensor 10 and the optional second sensor 20 may each be arranged to measure in any one of the directions described above and illustrated by the arrows d1, d2, d3, and d4. The same applies if the vehicle comprises further sensors configured to measure distance. By way of example, the vehicle 1 may comprise eight sensors configured to measure distance, such sensors arranged in pairs at each wheel of the vehicle wherein each pair one sensor is arranged to measure distance in the direction d1 or direction d3 and the other sensor configured to measure distance in the direction d2 or direction d4.

The vehicle may further comprise a control device 100. The control device 100 may be configured to request and receive information regarding a distance measured by the first sensor 10, the optional second sensor and/or optional further sensors configured to measure distance to an object outside of the vehicle. The control device may be configured to simply inform a driver of the vehicle of the distance to the object. Such information may be provided in accordance with any previously known means therefore. Alternatively, or additionally, the control device 100 may be configured to determine a desired trajectory of the vehicle for positioning the vehicle in relation to the object based on a determined distance measured by the first sensor and optionally any one of the additional sensors configured to measure distance discussed above. By way of example, the control device may be configured to determine a desired trajectory of the vehicle for positioning the vehicle at an appropriate distance from a curb at a bus stop, the appropriate distance allowing easy boarding at the same time as avoiding the risk of the vehicle hitting the curb when approaching the bus stop. The control device 100 may further be configured to determine a desired trajectory of the vehicle in consideration of the travelling speed of the vehicle.

The control device 100 may further be configured to provide assistance for travel of the vehicle according to the determined desired trajectory. For example, the control device may be configured to communicate information regarding the desired trajectory to a driver of the vehicle. Alternatively, or additionally, the control device may be configured to provide assistance for travel of the vehicle according to the determined desired trajectory by controlling a steering system of the vehicle in dependence of the determined desired trajectory. The purpose of such a control of the steering system is to assist a driver of the vehicle in steering the vehicle according to the determined desired trajectory. By way of example, the control device may be configured to control the steering system so as to apply an appropriate steering torque by means of a power steering actuator of the steering system. Alternatively, the steering system may be controlled so as to brake the front wheels independently to thereby facilitate the steering of the vehicle according to the determined desired trajectory. Thereby, the driver of the vehicle may release the steering wheel and allow the control device to automatically steer the vehicle according to the determined desired trajectory. Alternatively, the control device may be configured to provide an assisting steering torque on the steering wheel for guiding the driver to steer the vehicle according to the determined desired trajectory.

The control device 100 may be configured to control the holding device 11 to allow positioning of the first sensor 10 in the first position P1. More specifically, the control device may be configured to position the first sensor 10 in the first position P1 upon a determination of a desire or need for determining a distance to a potential object external of the vehicle, if the first sensor 10 is not already in the first position. This may for example be when the vehicle is approaching an intended stop at a curb, one possible purpose in such a case being to minimise the risk of the vehicle hitting the curb.

The control device 100 may further be configured to activate the first sensor so that the first sensor measures the distance to any potential object. The activation of the first sensor may for example be made in dependence of one or more of a threshold in traveling speed of the vehicle, an identification of an intended stop for example considering global positioning and map data, vehicle-to-vehicle information, image recognition information, or the like.

The control device 100 may comprise one or more control units. In case of a plurality of control units, each control unit may be configured to control a certain function or a certain function may be divided between more than one control units. The performance of the functions of the control device may be governed by programmed instructions. These programmed instructions typically take the form of a computer program which, when executed in the control device, causes the control device to effect desired forms of control action. Such instructions may be stored on a computer-readable medium.

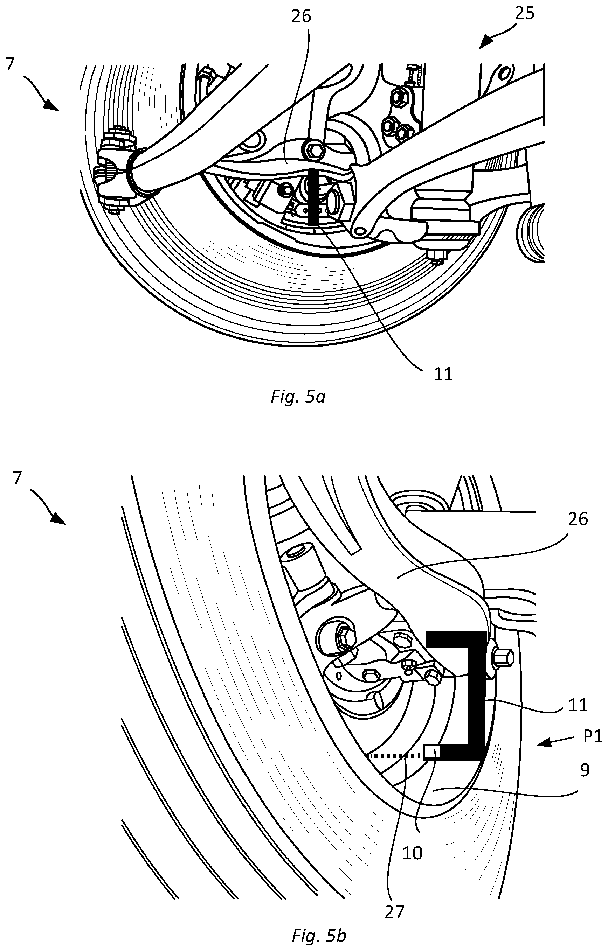

Figure 5a illustrates a partial view of an exemplifying wheel suspension arrangement and inside of one of the wheels 7 of the vehicle 1. In the figure, the holding device 11 is illustrated in solid black for sake of clarity. The holding device 11 is mounted to a beam member 26 of the wheel suspension 25 of the wheel 7. The beam member 26 constitutes a non-rotating constituent component of the vehicle 1. The beam member 26 follows the steering angle of the wheel 7. Therefore, the position of the first sensor 10 (not shown in the figure) which influences the direction in which the first sensor measures distance will follow the steering angle of the wheel corresponding to the situation shown in Figure 4 and illustrated by the arrow d3. The first sensor being attached to the beam member 26 by means of the holding device 11 shown in the figure may be configured to measure distance either in the longitudinal direction or in the lateral direction. When intended to measure distance laterally, the first sensor may be arranged so as to measure distance through one of more through openings of the wheel rim 9.

Figure 5b illustrates a partial view of the wheel suspension arrangement and wheel shown in Figure 5a but from a different perspective. From the figure, it can be clearly seen that the holding device 11 is arranged inside of the wheel rim 9. The first sensor 10 (not shown in the figure) is attached to the beam member 26 by means of the holding device 11. Thereby, also the first sensor 10 is arranged inside of the wheel rim 9, in such a manner that it will be protected by the wheel rim during travel of the vehicle 1. This position corresponds to the first position P1 previously discussed. As previously mentioned, the first sensor may be arranged so as to measure distance laterally in relation to the vehicle and horizontally with respect to the surface on which the vehicle 1 is present. The direction in which the first sensor 10 measures distance is in this figure illustrated by the dotted line 27.

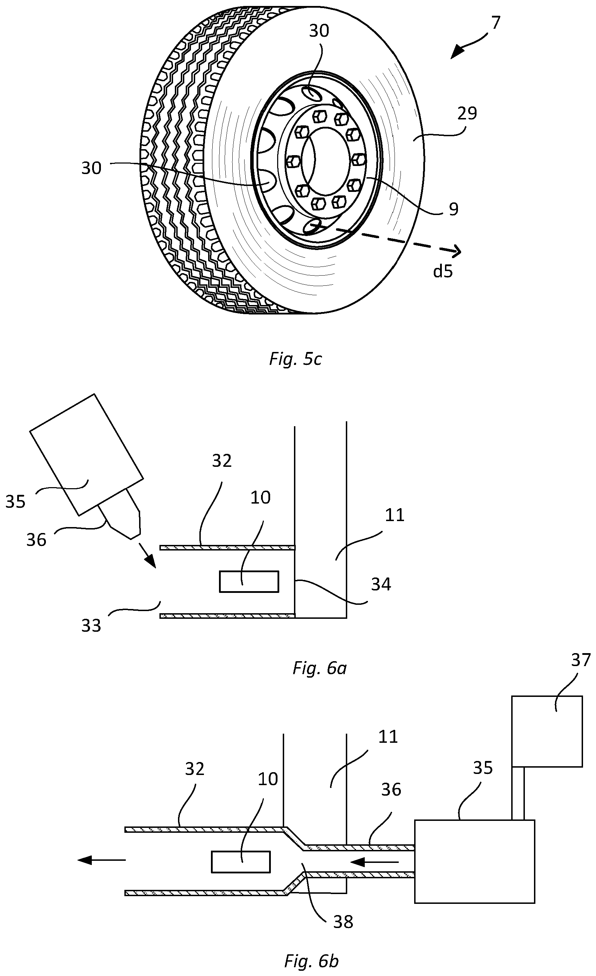

Figure 5c illustrates a perspective view of a vehicle wheel 7, seen from an outside if the wheel would be mounted on a vehicle. The wheel 7 comprises a wheel rim 9 at which a tire 29 is arranged. The wheel rim comprises a number of though openings 30. These openings 30 are not configured to receive attachment means for mounting the wheel onto the vehicle, but are usually provided for strength and low-weight purposes. These openings 30 thus remain open when the wheel 7 is mounted on the vehicle 1. As described above, the first sensor 10 may (when in the first position P1) be arranged so as to measure distance horizontally through such an opening 30. The direction in which the first sensor in such a case measure distance is illustrated in the figure by arrow d5.

In the case of a first sensor 10 being arranged so as to measure distance horizontally through one or more through openings of the wheel rim as described above, the control device 100 may suitably be configured to filter out distance measurements which are equal to, or smaller than, a distance between the first sensor (when in the first position P1) and the wheel rim. Thereby, incorrect readings in the determined distance may be ignored and will not affect the result of the purpose for which the control device uses the distance information, such as a determination of a desired trajectory or giving a driver a warning regarding risk for collision with an external object.

Figures 6a and 6b schematically illustrate a cross sectional views wherein the first sensor 10 is arranged in a tubular cover 32. The tubular cover 32 may be a constituent component of the holding device 11, or be attached to the holding device 11. The tubular cover 32 may comprise an open end 33 in the direction in which the first sensor 10 is intended to measure distance. The tubular cover 32 may also comprise a closed end 34 in the end opposing the open end 33, as illustrated in Figure 6a. The purpose of the tubular cover 32 is to protect the first sensor 10 against dirt, snow etc. and the risk for damage caused by particular matter from the surrounding environment during travel of the vehicle. A closed end 34 of the tubular cover 32 creates that an air pocket inside the tubular cover, the pressure thereof minimising the risk of unwanted matter entering into the tubular cover during travel of the vehicle.

The vehicle may further comprise a cleaning device 35 configured to allow cleaning of the first sensor by means of a cleaning medium ejected through a nozzle 36 of the cleaning device. Such a nozzle 36 is illustrated in Figure 6a, and the direction of the cleaning medium when ejected is illustrated by the arrow. The cleaning medium may for example be a liquid cleaning medium, such as water, or may be pressurised gaseous medium, such as pressurised air.

In Figure 6a, the nozzle 36 of the cleaning device 35 is separate from the tubular cover 32 and directs the cleaning fluid towards the first sensor 10 via the open end 33 of the tubular cover. However, in Figure 6b, the nozzle extends into an opening 38 of the tubular cover 32 and directs the cleaning fluid from behind the first sensor through the tubular cover 32, as illustrated by the arrows. Since the opening 38 is fitted with the nozzle 36 of the cleaning device, an air pocket will be created inside the tubular cover in the same way as described above with regard to the closed end 34.

Furthermore, as shown in Figure 6b, the cleaning device 35 may be fluidly connected to a brake bell 37 of the vehicle. Thereby, excess pressurised air from the brake bell 37 may be used for cleaning the first sensor 10.

The control device 100 described above may be configured to control the cleaning device 35 so as to eject the cleaning medium when the first sensor 10 is in a deactivated state, i.e. when the first sensor is not currently measuring a distance.

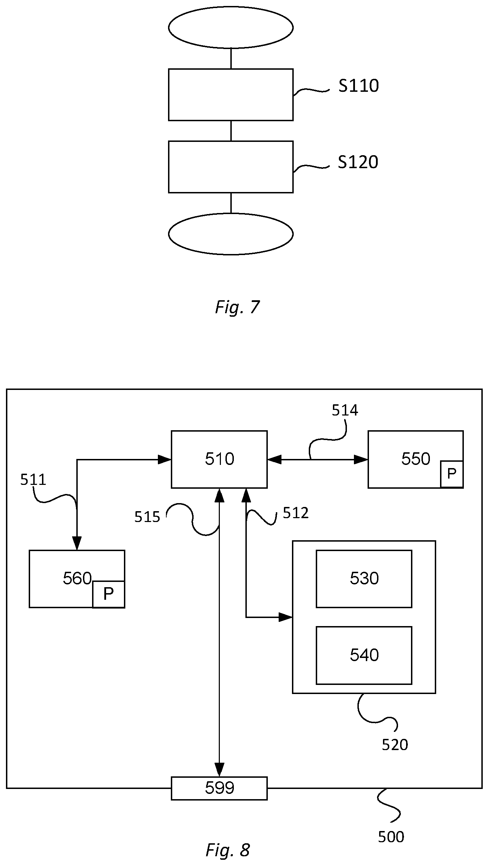

Figure 7 represents a flowchart schematically illustrating a method for providing assistance in positioning of a vehicle in relation to an object, the objected here exemplified by a curb, when approaching a stop for said vehicle. The method comprises a step S110 of determining a desired trajectory of the vehicle for positioning a longitudinal side of the vehicle within a predetermined distance interval from the curb at the stop. The determination of said desired trajectory of the vehicle is based on information from at least the first sensor configured to measure distance in a first direction, for example one of the directions d1 and d3 previously discussed. In other words, the first direction may for example be essentially perpendicular to the longitudinal side of the vehicle or essentially perpendicular to a wheel of the vehicle. The determination of said desired trajectory may further be based on information from at least a second sensor configured to measure distance in a second direction of the vehicle, the second direction being different from the first direction. The determination of the desired trajectory may further be based on the traveling speed of the vehicle.

The method may further comprise a step S120 of providing assistance for travel of the vehicle according to the desired trajectory determined in step S110. The step S120 may comprise providing assistance by communicating information relating to the determined desired trajectory to a driver of the vehicle, and/or controlling a steering system of the vehicle in dependence of the determined desired trajectory.

Figure 8 schematically illustrates an exemplifying embodiment of a device 500. The control device 100 described above may for example comprise the device 500, consist of the device 500, or be comprised in the device 500.

The device 500, shown in the figure, comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P that comprises instructions for providing assistance in positioning of a vehicle in relation to a curb when approaching a stop for said vehicle. The computer program comprises routines for determining a desired trajectory of the vehicle, for positioning a longitudinal side of the vehicle within a predetermined distance interval from the curb at the stop, based on information from at least a first sensor configured to measure distance in a first direction of the vehicle. The computer program further comprises routines for providing assistance for travel of the vehicle according to the determined desired trajectory.

The program P may be stored in an executable form or in a compressed form in a memory 560 and/or in a read/write memory 550.

The data processing unit 510 may perform one or more functions, i.e. the data processing unit 510 may effect a certain part of the program P stored in the memory 560 or a certain part of the program P stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicate with the data processing unit 510 via a data bus 514. The communication between the constituent components may be implemented by a communication link. A communication link may be a physical connection, such as an optoelectronic communication line, or a non-physical connection, such as a wireless connection, e.g. a radio link or microwave link.

When data are received on the data port 599, they may be stored temporarily in the second memory element 540. When input data received have been temporarily stored, the data processing unit 510 is prepared to effect code execution as described above.

Parts of the methods herein described may be effected by the device 500 by means of the data processing unit 510 which runs the computer program stored in the memory 560 or the read/write memory 550. When the device 500 runs the computer program, methods herein described are executed.

## Claims

1. A vehicle (1) comprising
at least one wheel (7, 8) comprising a wheel rim (9);
a first sensor (10) configured to measure a distance between the vehicle and a potential object in the vicinity of the vehicle, such as a curb;
wherein the first sensor (10) is attached to a non-rotating constituent component of the vehicle by means of a holding device (11), wherein the non-rotating constituent component is a beam member (26) of a wheel suspension arrangement (25) of the at least one wheel (7, 8), the holding device (11) configured to position the first sensor in a first position (P1) inside of the wheel rim (9) so as to be protected against the surrounding environment during travel by the wheel rim (9), **characterized in that**, when positioned in the first position (P1), the sensor (10) is arranged so as to measure the distance through one or more through-openings of the wheel rim (9) during rotation of the wheel rim (9), wherein the vehicle (1) further comprises a control device (100) configured to filter out distance measurements which are equal to or smaller than a distance between the first sensor (10) and the wheel rim (9).

2. The vehicle according to claim 1, wherein the holding device further is configured to position the first sensor temporarily in a second position (P2), the second position (P2) being further than the first position from a surface (12) on which the vehicle (1) is present.

3. The vehicle according to any one of the preceding claims, further comprising a cleaning device (35) configured to clean the first sensor (10) by means of a cleaning medium ejected through a nozzle (36) of the cleaning device.

4. The vehicle (1) according to claim 3, wherein the cleaning device (35) is fluidly connected to a brake bell (37) of the vehicle so as to allow pressurised air to be used as the cleaning medium.

5. The vehicle (1) according to any one of the preceding claims, wherein the first sensor (10) is arranged inside a tubular cover (32), optionally wherein the tubular cover (32) comprises an open end (33) and a closed end (34).

6. The vehicle (1) according to claim 5, wherein the tubular cover (32) comprises an opening into which a nozzle (36) of a cleaning device (35) extends.

7. The vehicle (1) according to any one of the preceding claims, wherein the control device (100) is configured to determine a desired trajectory of the vehicle (1) for positioning the vehicle in relation to an object based on a determined distance to the object measured by the first sensor (10).

8. The vehicle (1) according to claim 7, wherein the control device (100) is further configured to provide assistance for travel of the vehicle (1) according to the determined desired trajectory.

## Patentansprüche

1. Fahrzeug (1), das umfasst:
wenigstens ein Rad (7, 8) mit einer Felge (9);
einen ersten Sensor (10), der dazu eingerichtet ist, einen Abstand zwischen dem Fahrzeug und einem potenziellen Objekt in der Nähe des Fahrzeugs, beispielsweise einer Bordsteinkante, zu messen;
wobei der erste Sensor (10) über eine Haltevorrichtung (11) an einer nicht rotierenden Komponente des Fahrzeugs angebracht ist, wobei es sich bei der nicht rotierenden Komponente um ein Trägerelement (26) einer Radaufhängungsanordnung (25) des wenigstens einen Rads (7, 8) handelt, wobei die Haltevorrichtung (11) dazu eingerichtet ist, den ersten Sensor in einer ersten Position (P1) innerhalb der Felge (9) derart zu positionieren, dass er während der Fahrt durch die Felge (9) vor der Umgebung geschützt ist, **dadurch gekennzeichnet, dass** der Sensor (10), wenn er in der ersten Position (P1) positioniert ist, derart angeordnet ist, dass er bei Rotation der Felge (9) den Abstand durch eine oder mehrere Durchgangsöffnungen der Felge (9) misst, wobei das Fahrzeug (1) ferner eine Steuervorrichtung (100) umfasst, die dazu eingerichtet ist, Abstandsmessungen herauszufiltern, die gleich oder kleiner sind als ein Abstand zwischen dem ersten Sensor (10) und der Felge (9).

2. Fahrzeug nach Abstand 1, wobei die Haltevorrichtung ferner dazu eingerichtet ist, den ersten Sensor vorübergehend in einer zweiten Position (P2) zu positionieren, wobei die zweite Position (P2) von einer Fläche (12), auf der sich das Fahrzeug (1) befindet, weiter entfernt ist als die erste Position.

3. Fahrzeug nach einem der vorangehenden Ansprüche, das ferner eine Reinigungsvorrichtung (35) umfasst, die dazu eingerichtet ist, den ersten Sensor (10) mit Hilfe eines Reinigungsmediums zu reinigen, das durch eine Düse (36) der Reinigungsvorrichtung ausgestoßen wird.

4. Fahrzeug (1) nach Anspruch 3, wobei die Reinigungsvorrichtung (35) fluidisch mit einem Bremsscheibentopf (37) des Fahrzeugs verbunden ist, sodass Druckluft als Reinigungsmedium verwendet werden kann.

5. Fahrzeug (1) nach einem der vorangehenden Ansprüche, wobei der erste Sensor (10) innerhalb einer rohrförmigen Abdeckung (32) angeordnet ist, wobei optional die rohrförmige Abdeckung (32) ein offenes Ende (33) und ein geschlossenes Ende (34) aufweist.

6. Fahrzeug (1) nach Anspruch 5, wobei die rohrförmige Abdeckung (32) eine Öffnung umfasst, in die sich eine Düse (36) einer Reinigungsvorrichtung (35) erstreckt.

7. Fahrzeug (1) nach einem der vorangehenden Ansprüche, wobei die Steuervorrichtung (100) dazu eingerichtet ist, eine Sollbahn des Fahrzeugs (1) zur Positionierung des Fahrzeugs in Bezug auf ein Objekt basierend auf einem bestimmten Abstand zu dem Objekt zu bestimmen, der von dem ersten Sensor (10) gemessen wurde.

8. Fahrzeug (1) nach Anspruch 7, wobei die Steuervorrichtung (100) ferner dazu eingerichtet ist, Unterstützung für die Fahrt des Fahrzeugs (1) entsprechend der bestimmten Sollbahn bereitzustellen.

## Revendications

1. Véhicule (1) comprenant
au moins une roue (7, 8) comprenant une jante de roue (9) ;
un premier capteur (10) configuré pour mesurer une distance entre le véhicule et un objet potentiel à proximité du véhicule, tel qu'une bordure ;
dans lequel le premier capteur (10) est attaché à un composant constitutif non rotatif du véhicule au moyen d'un dispositif de maintien (11), dans lequel le composant constitutif non rotatif est un élément poutre (26) d'un agencement de suspension de roue (25) de l'au moins une roue (7, 8), le dispositif de maintien (11) étant configuré pour positionner le premier capteur dans une première position (P1) à l'intérieur de la jante de roue (9) de manière à être protégé contre l'environnement alentour pendant le déplacement par la jante de roue (9), **caractérisé en ce que,** lorsqu'il est positionné dans la première position (P1), le capteur (10) est agencé de manière à mesurer la distance à travers une ou plusieurs ouvertures traversantes de la jante de roue (9) pendant la rotation de la jante de roue (9), dans lequel le véhicule (1) comprend en outre un dispositif de commande (100) configuré pour éliminer par filtrage des mesures de distance qui sont égales ou inférieures à une distance entre le premier capteur (10) et la jante de roue (9).

2. Véhicule selon la revendication 1, dans lequel le dispositif de maintien est configuré en outre pour positionner le premier capteur temporairement dans une deuxième position (P2), la deuxième position (P2) étant plus éloignée que la première position d'une surface (12) sur laquelle le véhicule (1) est présent.

3. Véhicule selon l'une quelconque des revendications précédentes, comprenant en outre un dispositif de nettoyage (35) configuré pour nettoyer le premier capteur (10) au moyen d'un agent de nettoyage éjecté à travers une buse (36) du dispositif de

4. Véhicule (1) selon la revendication 3, dans lequel le dispositif de nettoyage (35) est relié fluidiquement à une cloche de frein (37) du véhicule de manière à permettre à l'air sous pression d'être utilisé comme agent de nettoyage.

5. Véhicule (1) selon l'une quelconque des revendications précédentes, dans lequel le premier capteur (10) est agencé à l'intérieur d'un couvercle tubulaire (32), éventuellement dans lequel le couvercle tubulaire (32) comprend une extrémité ouverte (33) et une extrémité fermée (34).

6. Véhicule (1) selon la revendication 5, dans lequel le couvercle tubulaire (32) comprend une ouverture dans laquelle une buse (36) d'un dispositif de nettoyage (35) s'étend.

7. Véhicule (1) selon l'une quelconque des revendications précédentes, dans lequel le dispositif de commande (100) est configuré pour déterminer une trajectoire souhaitée du véhicule (1) afin de positionner le véhicule par rapport à un objet sur la base d'une distance déterminée jusqu'à l'objet mesurée par le premier capteur (10).

8. Véhicule (1) selon la revendication 7, dans lequel le dispositif de commande (100) est configuré en outre pour fournir une assistance au déplacement du véhicule (1) selon la trajectoire souhaitée déterminée.
